# EUROPEAN PATENT APPLICATION

(11) **EP 4 768 156 A1**
(43) Date of publication of application: **01.07.2026**
(21) Application number: 25207387.9
(22) Date of filing: 08.10.2025
(51) Int. Cl.: B22F 10/64, B33Y 40/20, B33Y 80/00, C22C 1/04, C22C 19/05, C22F 1/10, B22F 5/00

(54) **METHOD FOR MANUFACTURING METAL LAMINATION-SHAPED ARTICLE CONSISTING OF NI-BASED ALLOY AND SHAPED ARTICLE**

(30) Priority: 27.12.2024 JP 2024232175
(71) Applicant: Sumitomo Heavy Industries, Ltd., Tokyo 141-6025 (JP)
(72) Inventor: MITAMA, Ichiro, Kanagawa, 237-8555, (JP); SAKATA, Takuma, Tokyo, 141-6025, (JP); SALAM, Shahzad, Kanagawa, 237-8555, (JP)
(74) Representative: Louis Pöhlau Lohrentz

(57) **Abstract**

Provided is a method for manufacturing a metal lamination-shaped article in which creep rupture strength satisfies a standard value in Inconel (registered trademark) 718 of a Ni-based alloy. A method for manufacturing a metal lamination-shaped article consisting of a Ni-based alloy includes: a homogenizing treatment step (1) of performing a homogenizing treatment on a metal lamination-shaped article consisting of the Ni-based alloy containing 50% by mass to 55% by mass of Ni, 17% by mass to 21% by mass of Cr, 2.8% by mass to 3.3% by mass of Mo, 4.75% by mass to 5.5% by mass of a total of Nb and Ta, 0.65% by mass to 1.15% by mass of Ti, 0.2% by mass to 0.8% by mass of Al, and the remainder consisting of Fe and inevitable impurities at 1,050°C or higher and 1,250°C or lower; a solutionizing treatment step (2) of performing a solutionizing treatment on the metal lamination-shaped article after the homogenizing treatment step (1); and an aging step (3) of performing an aging treatment at 650°C or higher and 720°C or lower after the solutionizing treatment step (2).

## Description

### BACKGROUND OF THE INVENTION

### Field of the Invention

The present invention relates to a method for manufacturing a metal lamination-shaped article consisting of a Ni-based alloy and a shaped article.

### Description of Related Art

As an alloy having high strength at a high temperature, Inconel (registered trademark) 718 of a Ni-based alloy is known. This alloy is a precipitation-strengthened alloy, has high strength at a temperature of approximately 700°C, and has various characteristics such as excellent corrosion resistance. As a result, a turbine disk of a jet engine of an aircraft, a rotary component of a rocket engine, a high-tension bolt, and the like are widely used.

As a method for manufacturing Inconel (registered trademark) 718, for example, Japanese Unexamined Patent Publication No. 2011-157566 discloses a method for manufacturing a Ni-based alloy including a solutionizing treatment step of performing a solutionizing treatment on a Ni-based alloy containing 50% by weight to 55% by weight of Ni, 17% by weight to 21% by weight of Cr, 2.8% by weight to 3.3% by weight of Mo, 4.75% by weight to 5.5% by weight of Nb, 0.65% by weight to 1.15% by weight of Ti, 0.2% by weight to 0.8% by weight of Al, and the remainder substantially consisting of Fe at 1,010°C or higher and 1,070°C or lower, and an aging step of performing an aging treatment at 680°C or higher and 720°C or lower for 5 hours or longer and 20 hours or shorter after the solutionizing treatment step.

### SUMMARY OF THE INVENTION

In the related art, as a metal material including an alloy, a molten material using a mold has been mainly used. Japanese Unexamined Patent Publication No. 2011-157566 is also a technique based on the assumption of the molten material.

On the other hand, in recent years, the number of metal lamination-shaped articles has been increasing. In metal lamination shaping, the material is joined and laminated for each layer from a three-dimensional data model without using a mold to manufacture a shaped article. The metal lamination shaping has the following advantages as compared with the molten material in the related art.
- High degree of freedom of design.: A complicated shape, a structure having a cavity at the inside, a lattice structure, a thin structure, and the like are possible. A plurality of components may be integrated.
- Design changes are easy.
- No mold is required.
- Since it does not take time to manufacture a mold, a manufacturing time and a construction period are greatly shortened.
- Traceability for each product is possible, and the like.

In a case where Inconel (registered trademark) 718 of a Ni-based alloy is used for the metal lamination shaping, a high-temperature strength, particularly a creep rupture strength may not satisfy SAE AMS5663, which is a forging standard of Inconel (registered trademark) 718 in many cases.

An object of the present invention is to provide a method for manufacturing a metal lamination-shaped article in which the creep rupture strength satisfies a standard value in Inconel (registered trademark) 718 of a Ni-based alloy.

To accomplish the object, according to an aspect of the present invention, there is provided a method for manufacturing a metal lamination-shaped article consisting of a Ni-based alloy, the method including: a homogenizing treatment step of performing a homogenizing treatment on a metal lamination-shaped article consisting of the Ni-based alloy containing 50% by mass to 55% by mass of Ni, 17% by mass to 21% by mass of Cr, 2.8% by mass to 3.3% by mass of Mo, 4.75% by mass to 5.5% by mass of a total of Nb and Ta, 0.65% by mass to 1.15% by mass of Ti, 0.2% by mass to 0.8% by mass of Al, and the remainder consisting of Fe and inevitable impurities at 1,050°C or higher and 1,250°C or lower; a solutionizing treatment step of performing a solutionizing treatment on the metal lamination-shaped article after the homogenizing treatment step; and an aging step of performing an aging treatment at 650°C or higher and 720°C or lower after the solutionizing treatment step.

Here, in the homogenizing treatment step, the homogenizing treatment may be performed at 1,050°C or higher and 1,250°C or lower for 2 hours or longer.

In addition, according to another aspect of the present invention, there is provided a shaped article consisting of a Ni-based alloy containing 50% by mass to 55% by mass of Ni, 17% by mass to 21% by mass of Cr, 2.8% by mass to 3.3% by mass of Mo, 4.75% by mass to 5.5% by mass of a total of Nb and Ta, 0.65% by mass to 1.15% by mass of Ti, 0.2% by mass to 0.8% by mass of Al, and the remainder consisting of Fe and inevitable impurities by metal lamination shaping, the shaped article exhibiting a result that satisfies the following test, in which in the test, a test piece including a standard smooth portion and a notch for a stress rupture test according to ASTM E292 is prepared from the formed Ni-based alloy, and the test piece is maintained at 649°C ± 2°C, and when an axial initial stress of 689 MPa is applied to the test piece and then a load is continuously applied to the test piece, the smooth portion of the test piece is first ruptured, and the rupture occurs after at least 23 hours.

In addition, the shaped article may be a stator vane.

According to the present invention, it is possible to provide a method for manufacturing a metal lamination-shaped article in which creep rupture strength satisfies the standard value in Inconel (registered trademark) 718 of a Ni-based alloy.

### BRIEF DESCRIPTION OF THE DRAWINGS

FIG. 1 is a graph schematically illustrating a method for manufacturing a Ni-based alloy.
FIG. 2 is a view schematically illustrating a microstructure of the Ni-based alloy according to the present embodiment.

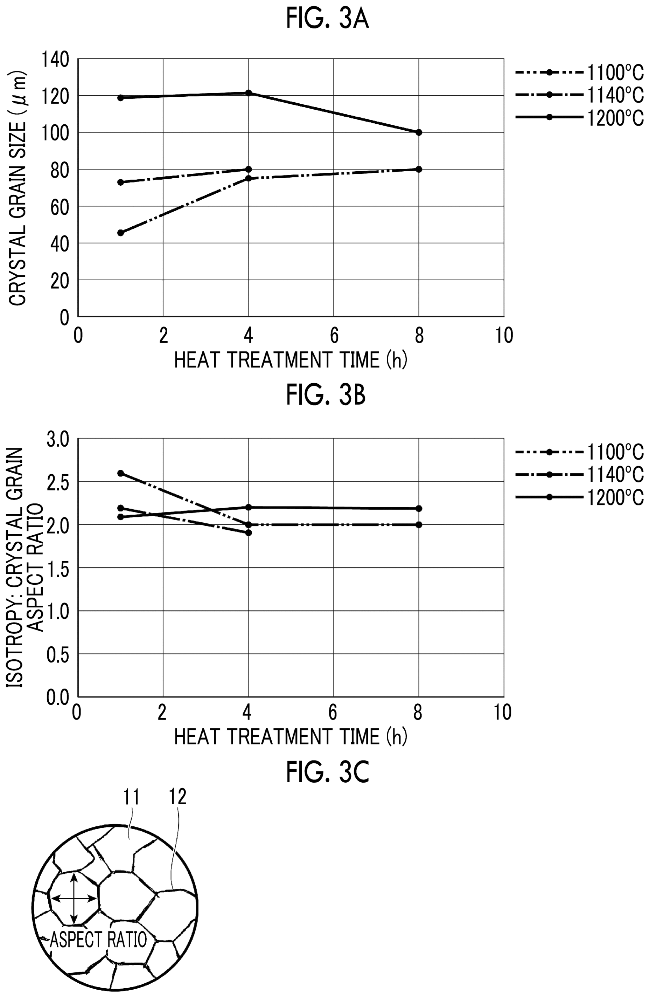

FIGS. 3A to 3C are graphs and schematic views illustrating an influence of a heat treatment temperature on a crystal structure in a homogenizing treatment step of the present embodiment. FIG. 3A is a graph illustrating a relationship between a heat treatment time and a crystal grain size in a case where a heat treatment temperature is changed, FIG. 3B is a graph illustrating a relationship between the heat treatment time and the isotropy: crystal grain aspect ratio in a case where the heat treatment temperature is changed, and FIG. 3C is a schematic view illustrating an aspect ratio in a microstructure.
FIG. 4 is a view schematically illustrating a structure of a stator vane.
FIGS. 5A and 5B are views illustrating a test piece prepared in an example. FIG. 5A is a schematic view illustrating an overall shape and dimensions of the test piece, and FIG. 5B is a view illustrating a shape of a cutout portion.

### DETAILED DESCRIPTION OF THE INVENTION

Hereinafter, embodiments according to the present invention will be described in detail. The following embodiments are illustrative, and the technical scope of the present invention is not limited to the following aspects.

In the present disclosure, expressions "00 or more and 00 or less" or "00 to 00" that represent a numerical range mean a numerical range including stated upper and lower limits unless otherwise specified.

In a manufacturing method according to the present embodiment, a metal lamination-shaped article consisting of a Ni-based alloy having a specific composition is used. The composition of the Ni-based alloy contains 50% by mass to 55% by mass of Ni, 17% by mass to 21% by mass of Cr, 2.8% by mass to 3.3% by mass of Mo, 4.75% by mass to 5.5% by mass of Nb and Ta as a total amount, 0.65% by mass to 1.15% by mass of Ti, 0.2% by mass to 0.8% by mass of Al, and the remainder consisting of Fe and inevitable impurities. The chemical composition corresponds to a composition range of a precipitation-hardened nickel-chromium-iron alloy called Inconel (registered trademark) 718.

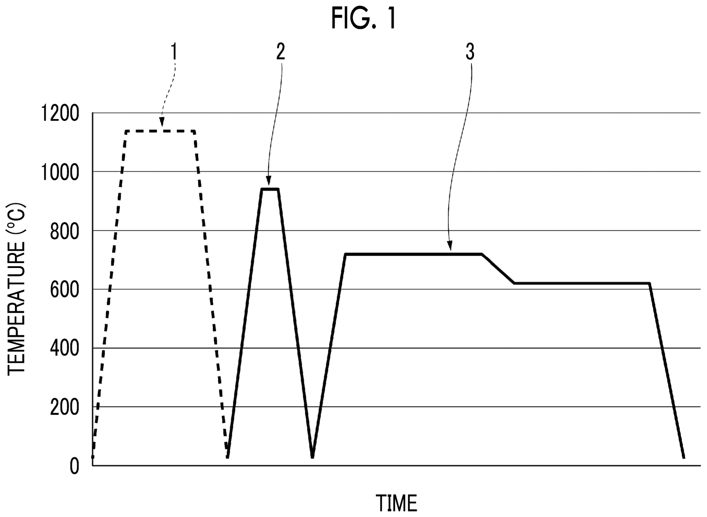

Here, FIG. 1 shows a graph schematically illustrating a method for manufacturing a Ni-based alloy according to the present embodiment. In SAE AMS5663, which is a forging standard of Inconel (registered trademark) 718 in the related art, a heat treatment shown by a solid line in FIG. 1 is performed by a manufacturing method from a raw material of the Ni-based alloy. Specifically, a solutionizing treatment step 2 for 1 hour is performed at 941°C to 1,010°C and is cooled, and then an aging treatment step 3 is performed and cooled. In the aging treatment step 3, the aging treatment was performed, for example, at 720°C for 8 hours, and then the aging treatment was performed at 620°C for 8 hours.

In the method for manufacturing the metal lamination-shaped article consisting of the Ni-based alloy of the present embodiment, first, a homogenizing treatment step 1 shown by a dotted line in FIG. 1 is performed, and then the solutionizing treatment step 2 and the aging treatment step 3 that have been performed in the related art are performed.

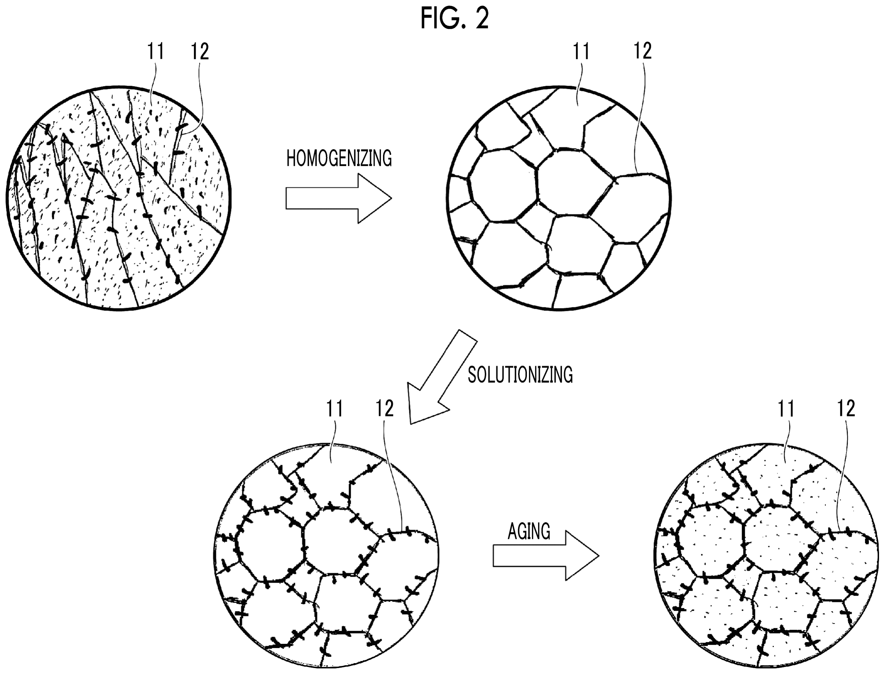

The manufacturing method according to the present embodiment will be described with reference to FIG. 2 schematically illustrating a microstructure of a Ni-based alloy.

Although four circles in FIG. 2 are shown, an upper-left circle is a view schematically showing a microstructure of the Ni-based alloy before the heat treatment, an upper-right circle is a view schematically showing the microstructure of the Ni-based alloy after the homogenizing treatment, a lower-left circle is a view schematically showing the microstructure of the Ni-based alloy after the solutionizing treatment, and a lower-right circle is a view schematically showing the microstructure of the Ni-based alloy after the aging treatment. These microstructures are usually observed by a scanning electron microscope (SEM), and a more detailed structure is observed by a transmission electron microscope (TEM). Means for observing the microstructure is not limited to these, and other means may be used.

The upper-left circle in FIG. 2 shows a state of the microstructure before the heat treatment in the present embodiment is performed. It is a phase diagram of the microstructure of a metal lamination-shaped article consisting of a Ni-based alloy having a specific composition described above.

The metal lamination shaping is a method of dissolving and solidifying a necessary portion in each layer of a metal powder used as a raw material based on a three-dimensional data model of a desired shaping material without using a mold to create a shape by laminating layers. In addition, a metal lamination-shaped article refers to a shaped article such as a metal component shaped by the metal lamination shaping.

As a method for manufacturing a metal lamination-shaped article, the following methods are mainly used.
- A method of melting and solidifying a metal powder of a raw material with a laser or an electron beam and laminating the metal powder.
- A method of spreading a metal powder in a uniform thickness, printing the metal powder with a binder (a binding material) for each layer, laminating the metal powder, and performing a sintering step after the lamination.
- A method of melting and laminating a plastic resin while extruding a raw material obtained by kneading a metal powder and the plastic resin, and then performing a sintering step after the lamination.

A method using the laser or the electron beam as described above is preferable in the present invention. In the present embodiment, the metal powder of the raw material has the same composition as an intended Ni-based alloy, and contains 50% by mass to 55% by mass of Ni, 17% by mass to 21% by mass of Cr, 2.8% by mass to 3.3% by mass of Mo, 4.75% by mass to 5.5% by mass of the total of Nb and Ta, 0.65% by mass to 1.15% by mass of Ti, 0.2% by mass to 0.8% by mass of Al, and the remainder consisting of Fe and inevitable impurities. The metal powder is melted and solidified for each layer of the metal powder by a laser or an electron beam, and the layers are laminated to obtain a desired metal lamination-shaped article.

A schematic view of a microstructure of the obtained metal lamination-shaped article is shown by the upper-left circle in FIG. 2 as described above. A reference numeral 11 in the microstructure represents crystal grains, and a reference numeral 12 represents a crystal grain boundary indicating a boundary between a crystal and another crystal. In the microstructure after the metal lamination shaping, the crystal grains 11 extend in a layer direction during the metal lamination shaping to form a structure in which slightly elongated shapes are collected, and black dots in the structure of the crystal grains 11 are minute crystals of a δ-phase precipitated in the crystal grains 11. In the microstructure, a black line between the crystals is the crystal grain boundary 12 which is a boundary between the crystals, and black dots are present at the crystal grain boundary 12 in the microstructure, but the black dots are fine crystals precipitated at the crystal grain boundary 12.

Next, a homogenizing treatment is performed. As described above, the heat treatment has not been performed in Inconel (registered trademark) 718 in the related art.

The homogenizing treatment is a heat treatment in which a Ni-based alloy is heated and held at a relatively high temperature and then cooled in order to eliminate nonuniformity of a structure generated by the metal lamination shaping. This is also referred to as diffusion annealing.

The homogenizing treatment eliminates separation of elements in the alloy and eliminates an anisotropy of the crystal structure, the structure becomes isotropic, and the crystals grow in this process. In the present embodiment, it is observed that the Nb segregated in the crystals is diffused in the structure and the entire structure is homogenized. In addition, a particle structure becomes coarse due to the growth of the crystal grains 11, and there is a tendency that strength such as the tensile strength tends to decrease. Therefore, conditions such as a temperature and time of the homogenizing treatment need to be carefully selected.

Graphs showing an influence of a heat treatment temperature on a crystal structure in the homogenizing treatment step of the present embodiment are shown in FIGS. 3A to 3C. FIG. 3A is a graph showing a relationship between a heat treatment time and a crystal grain size in a case where the heat treatment temperature is changed, and FIG. 3B shows the heat treatment time and the isotropy: crystal grain aspect ratio in a case where the heat treatment temperature is changed. In FIGS. 3A to 3C, the same raw material powder of the Ni-based alloy as in Example 1 to be described later is used, and a test piece suitable for examination is prepared by the same metal lamination shaping operation as that in Example 1, and is observed with SEM. The crystal grain aspect ratio is obtained by selecting two longest straight lines perpendicular to each other for each of the crystal grains 11 as shown in the schematic view of the microstructure in FIG. 3C, and an average value for 50 crystals is obtained.

As is clear from the graph in FIG. 3A, in a case of performing the homogenizing treatment at temperatures of 1,100°C, 1,140°C, and 1,200°C, a crystal grain size after the treatment is the largest at 1,200°C, and is approximately 120 µm at 1,200°C, and approximately 80 µm at 1,100°C and 1,140°C. In addition, the aspect ratio indicating isotropy is approximately 2.0 at all three temperatures for a heat treatment time of 1 to 4 hours, and the effect is almost saturated.

As a result of the examination in view of these situations, in a homogenizing treatment step 1, the heat treatment temperature is preferably 1,050°C or higher and 1,250°C or lower, more preferably 1,100°C or higher and 1,240°C or lower, and still more preferably 1,130°C or higher and 1,210°C or lower. In addition, the heat treatment time in the homogenizing treatment step 1 is preferably 1 hour or longer, more preferably 3 hours or longer, and still more preferably 4 hours or longer. Since the effect of the heat treatment is saturated in 4 hours or longer, there is no upper limit on the heat treatment time. However, since the heat treatment for an excessively long time is not efficient, for example, 6 hours or shorter is preferable, and 5 hours or shorter is more preferable.

In the microstructure of the Ni-based alloy after the homogenizing treatment step 1, as shown in the upper-right circle of FIG. 2, the crystal grains 11 are closer to a circle and the aspect ratio is smaller than that before the homogenizing treatment, so that the isotropy is improved. In addition, the crystals of the δ-phase precipitated in the crystal grains 11 also disappear, and the crystals precipitated at the crystal grain boundary 12 also disappear.

After the homogenizing treatment is performed, the Ni-based alloy is cooled to lower the temperature to a temperature near room temperature.

Subsequently, a solutionizing treatment step 2 is performed. This treatment is a treatment that has been performed even in Inconel (registered trademark) 718 in the related art.

The solutionizing treatment is a heat treatment process of homogenizing an internal structure of the alloy by uniformly heating the Ni-based alloy subjected to the homogenizing treatment at a high temperature to be a solid-solution state and then cooling the Ni-based alloy. According to this process, an abnormal crystal structure in the alloy is eliminated, and a function of the alloy material is improved.

In the present embodiment, the δ-phase is precipitated at the crystal grain boundary 12 in the solutionizing treatment step 2. The precipitation of the δ-phase in the microstructure can be detected by SEM observation and component analysis.

By precipitating the δ-phase at the crystal grain boundary 12, the crystal grain boundary 12 can be fixed by a peening effect. However, in the subsequent aging treatment step 3, a γ-phase and a γ"-phase, which are the strengthening phases, are precipitated in the crystal grain boundary 12 in order to strengthen the Ni-based alloy. Since the δ-phase, the γ'-phase, and the γ"-phase are the same components, when the amount of precipitation of the δ-phase is excessive, the strengthening phase component is consumed. In addition, the δ-phase is first precipitated to the crystal grain boundary 12, and then precipitated to the crystal grain 11.

Therefore, time for the solutionizing treatment is selected to be a time when the δ-phase is precipitated to the crystal grain boundary 12 but is not precipitated in the crystal grain 11.

As a result of examination based on these conditions, the solutionizing treatment is preferably 935°C or higher and 1,010°C or lower, and more preferably 935°C or higher and 965°C or lower. In addition, the time for the solutionizing treatment is preferably 2 hours or longer and 6 hours or shorter.

In general, in a final metal lamination-shaped article, the strength of the shaped article is often different in a vertical direction of the lamination shaping (referred to as a "V direction") and a lamination direction of the lamination shaping (referred to as an "H direction"). Also in the present invention, as shown in the example, results of the creep rupture test are different between the V direction and the H direction of the test piece. In the present embodiment, as conditions under which the results of the creep rupture test in the V direction and the H direction are passed, it is preferable that a combination of the homogenizing treatment and the solutionizing treatment is such that the homogenizing treatment is performed at 1,050°C or higher and 1,250°C or lower for 3 hours or longer and 5 hours or shorter, and the solutionizing treatment is performed at 935°C or higher and 965°C or lower for 2 hours or longer and 5 hours or shorter, particularly 3 hours or longer and 4 hours or shorter.

In addition, as conditions under which both the creep rupture test and a high-temperature tensile test are compatible in the V direction in which the strength of the test piece tends to be weak, it is preferable that the combination of the homogenizing treatment and the solutionizing treatment is such that the homogenizing treatment is performed at 1,050°C or higher and 1,250°C or lower for 1 hour or longer and 2 hours or shorter, and the solutionizing treatment is performed at 935°C or higher and 965°C or lower for 2 hours or longer and 4 hours or shorter.

After the solutionizing treatment is performed, the Ni-based alloy is cooled to lower the temperature to near room temperature.

The microstructure of the Ni-based alloy after the solutionizing treatment step 2 is substantially the same as that after the homogenizing treatment in terms of the shape of the crystal grains 11 as shown in the lower-left circle in FIG. 2, and the δ-phase crystal is precipitated at the crystal grain boundary 12.

Subsequently, the aging treatment step 3 is performed. This treatment is also a treatment that has been performed on Inconel (registered trademark) 718 in the related art. The Ni-based alloy after the aging treatment has a hardness of 350 HV or more.

The aging treatment is a treatment of precipitating a strengthening phase by heating the Ni-based alloy subjected to the solutionizing treatment to improve the strength. The alloy of the present embodiment is a precipitation hardening-based alloy, and the γ'-phase and the γ"-phase, which are the strengthening phases in the Ni-based alloy, can be precipitated in the crystal grains 11 by the aging treatment to improve the strength. Both the γ'-phase and the γ"-phase have a face-centered cubic structure, and the δ-phase that is a stable phase has a body-centered cubic structure.

As the aging treatment proceeds, the strength of the Ni-based alloy is improved, but there is also a side effect that "notch sensitivity" increases. As described in the example, the term "notch sensitivity" refers to a tendency that when a notched test piece is prepared from a Ni-based alloy and a tensile stress is applied to the test piece to be pulled, an initial rupture location is a notch that is a cutout portion of the test piece instead of a smooth portion thereof.

In a case of applying a tension at a high temperature to Inconel (registered trademark) 718 in a creep rupture test, it is required that the initial rupture point is the smooth portion. When the heating in the aging treatment proceeds too much, the alloy material becomes brittle, and the tendency to be ruptured at the cutout portion or the notch increases.

In the aging treatment step 3, the temperature of the aging treatment is preferably 650°C or higher and 720°C or lower, and more preferably 680°C or higher and 720°C or lower. In a case of 680°C or higher, the hardness of the Ni-based alloy quickly reaches 350 HV, which is the standard value, but it is not preferable to proceed with the heat treatment too much as described above. Therefore, the heat treatment time is performed preferably for 2 hours or longer, and there is no theoretical upper limit, but practically, 25 hours or shorter is adopted.

The heat treatment of the aging treatment may be performed at one temperature, but as illustrated in FIG. 1, the temperature may be changed in the middle of the heat treatment.

After the aging treatment is performed, the Ni-based alloy is cooled to lower the temperature to near room temperature. The metal lamination-shaped article of the present embodiment is obtained by the aging treatment.

The microstructure of the Ni-based alloy after the aging treatment step 3 is substantially the same as that after the solutionizing treatment in terms of the shape of the crystal grains 11 as shown in the lower-right circle in FIG. 2, and the crystals of the γ'-phase and the γ"-phase are precipitated in the crystal grains 11 as indicated by black dots.

The metal lamination-shaped article of the present embodiment has high high-temperature strength and is excellent in corrosion resistance, manufacturing process efficiency, and the like. The metal lamination-shaped article of the present embodiment satisfies three conditions of the creep rupture test standard value as shown in the example, or satisfies at least two conditions. In a case where the two conditions are satisfied, it is preferable that the test piece is ruptured at the smooth portion and a rupture time is at least 23 hours. In addition, as shown in a reference example, the high-temperature tensile test standard value specified in SAE AMS5663 may be satisfied at least in part.

The metal lamination-shaped article of the present embodiment can be used for the following applications in which Inconel (registered trademark) 718 in the related art has been used.

Examples of the applications include a turbine disk of a jet engine of an aircraft, a rotary component and a stationary component of a gas turbine or a rocket engine, a high-tension bolt, a spring, a fastener, a component of a nuclear reactor or a spacecraft, a high-temperature tool for extrusion or shearing processing (such as copper), a pump shaft used for offshore and marine engineering, a wellhead device to which a high stress is applied, an oil well equipment, an alloy for a well drilling device for sour oil or sour gas (containing hydrogen sulfide, carbon dioxide, and chloride), and the like.

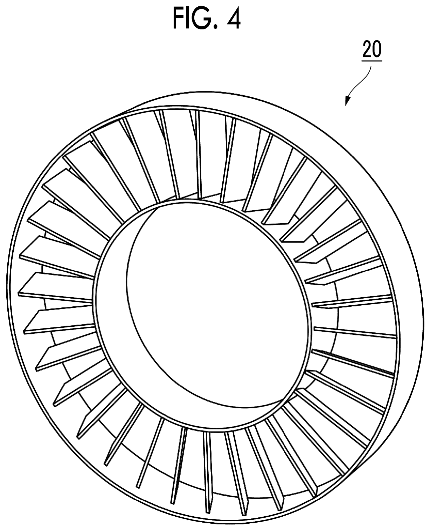

In particular, the metal lamination-shaped article of the present embodiment has a characteristic in which a complex structure provided with a protrusion portion such as a fin or a feather can be integrally manufactured without using a connection component such as a bolt or a nut. Therefore, for example, it is also possible to manufacture the stator vane 20 as shown in FIG. 4 with the Ni-based alloy of the present embodiment.

The present invention is not limited to the above-described embodiments, and other embodiments are also possible as long as the embodiments are within the scope of the present invention.

### [Examples]

Hereinafter, the embodiment of the present invention will be described in detail with reference to examples, but the embodiment of the present invention is not limited to these examples. In the following description, unless otherwise specified, "%" is based on a mass.

### (Examples 1 to 3)

### <Preparation of Test Piece>

A Ni-based alloy powder composed of the following chemical composition was prepared.

### "Powder Composition"

| | |
|---|---|
| • Ni: | 53.02% |
| • Cr: | 18.6% |
| • Mo: | 2.97% |
| • Nb + Ta: | 5.07% |
| • Ti: | 0.87% |
| • Al: | 0.61% |
| • C: | 0.04% |
| • Mn: | 0.01% |
| • Si: | 0.04% |
| • P: | 0.005% |
| • B: | 0.001% |
| • O: | 0.006% |
| • N: | 0.002% |
| • Fe: | Remainder |

The powder was used as a raw material, and test pieces were prepared by using a three-dimensional lamination shaping apparatus "EOS M290" (manufactured by EOS GmbH). A shaping method adopted the Powder Bed Fusion-Laser Beam (PBF-LB) mode, and the shaping conditions adopted standard shaping conditions of the shaping apparatus.

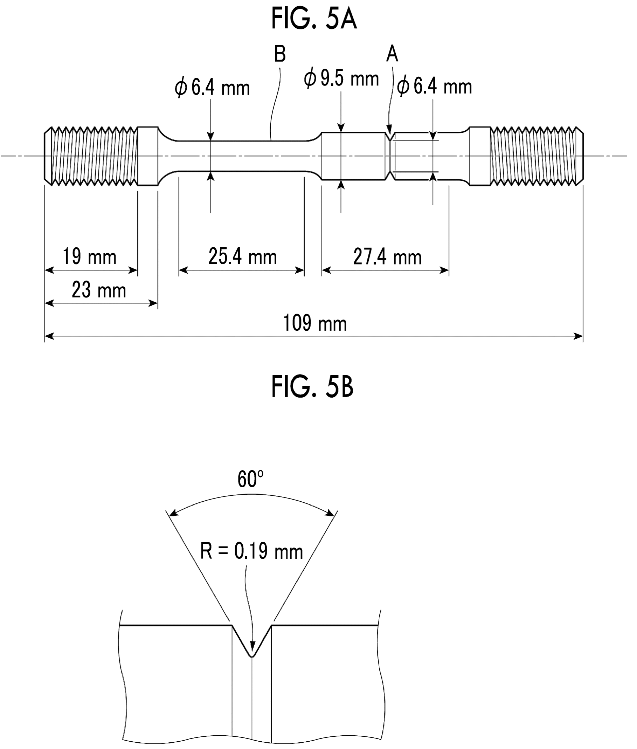

The prepared test pieces are test pieces for a stress rupture test conforming to ASTM E292, and are standard notched test pieces. FIG. 5A shows an overall shape and dimensions of the test pieces, and FIG. 5B shows a shape of a cutout portion A in the drawing.

In addition, two types of test pieces were prepared, one in which the vertical direction (referred to as a "V direction") of the three-dimensional lamination shaping is set as a longitudinal direction, and the other in which the lamination direction (referred to as an "H direction") of the three-dimensional lamination shaping is set as a longitudinal direction. Therefore, the test pieces were prepared by preparing a total of two notched test pieces in which the longitudinal direction is set as the V direction and the H direction one by one for each example.

### <Heat Treatment>

The homogenizing treatment was performed on each of the prepared test pieces under conditions shown in Table 1. A cooling method at this time was a furnace cooling. After the homogenizing treatment, the solutionizing treatment was performed under conditions shown in Table 1. A cooling method at this time was a furnace cooling. Further, after the solutionizing treatment, the aging treatment was performed under conditions shown in Table 1. A cooling method at this time was a furnace cooling.

### <Creep Rupture Test>

In a state where the test piece subjected to the heat treatment was maintained at 649°C ± 2°C, after an initial stress of 689 MPa was applied in the axial direction, the same stress was continuously applied until the test piece was ruptured.

Table 1 shows the rupture location of the test piece, the number of hours during which the stress is applied until the test piece is ruptured, and an elongation rate of the test piece after the rupture with respect to the start of the test. A "smooth portion" at the rupture location refers to a B portion in FIG. 5A. A location where the test piece is ruptured is usually any of the smooth portion B and the cutout portion A.

The standard value of the creep rupture test in AMS 5663 is to satisfy all of the following three conditions.
- Rupture location of test piece: Smooth portion (not the cutout portion A)
- Time up to Rupture: 23 hours or longer
- Elongation rate of test piece at rupture: 4% or more

**[Table 1]**

| | Homogenizing conditions | | Solutionizing conditions | | Aging conditions | | Creep rupture test | | | | |
|---|---|---|---|---|---|---|---|---|---|---|---|
| | Temperature (°C) | Treatment time (Hr) | Temperature (°C) | Treatment time (Hr) | Temperature (°C) | Treatment time (Hr) | Direction of test piece | Comprehensive result | Rupture location | Rupture time (Hr) | Elongation (%) |
| Example 1 | 1140 | 4 | 941 | 3 | 720 | 2 | V | A | Smooth portion | 34.0 | 12.3 |
| | | | | | | | H | A | Smooth portion | 25.6 | 6.1 |
| Example 2 | 1200 | 4 | 941 | 3 | 680 | 20 | V | A | Smooth portion | 31.4 | 11.9 |
| | | | | | | | H | A | Smooth portion | 24.2 | 6.5 |
| Example 3 | 1100 | 4 | 941 | 3 | 680 | 8 | V | A | Smooth portion | 25.3 | 10.6 |
| | | | | | | | H | B | Smooth portion | 16.3 | 8.2 |

A comprehensive result in Table 1 was determined based on the following criteria.
A: All the three conditions of the creep rupture test are satisfied.
B: Two conditions among the three conditions of the creep rupture test are satisfied (pass).
C: One condition among the three conditions of the creep rupture test is satisfied, or there is no condition satisfied (failure).

### (Comparative Example)

The same powder as in Examples 1 to 3 was used as a raw material, and two notched test pieces in the V direction and the H direction were prepared under the same shaping conditions as in Examples 1 to 3.

The two test pieces were sequentially subjected to the following heat treatments defined in SAE AMS5663 that is a forging standard of Inconel (registered trademark) 718.
- Solutionizing treatment: for 1 hour at 941°C
- Aging treatment: for 8 hours at 720°C, and then for 8 hours at 620°C

After each heat treatment, the heat-treated test piece was cooled by furnace cooling.

The creep rupture test was performed on the test piece subjected to the heat treatment as in Example 1 to Example 3. The result is shown in Table 2 in combination with a comprehensive result. The reference for the comprehensive result is the same as that in Table 1.

**[Table 2]**

| | | | | | |
|---|---|---|---|---|---|
| Comparative Example | Creep rupture test | | | | |
| | Direction of test piece | Comprehensive result | Rupture location | Rupture time (Hr) | Elongation (%) |
| | V | C | Cutout portion | 13.4 | 0.7 |
| | H | C | Cutout portion | 0.3 | 0.3 |

### (Reference Example)

### <Preparation of Test Piece>

Two test pieces in which the longitudinal direction is set as the V direction and the H direction were prepared in the same manner as in Example 1 except that the test pieces to be prepared are test pieces according to ASTM E8/E81.

### <Heat Treatment>

The same heat treatment as in Example 1 was performed on these test pieces.

### <High-Temperature Tensile Test>

For the test piece subjected to the heat treatment, an elongation at rupture and a reduction in area were obtained from a tensile test of the metal material at a high temperature of 649°C ± 3°C defined in ASTM E21. The results are shown in Table 3.

The elongation at the time of rupture is a percentage of the elongation in the longitudinal direction of the test piece when the test piece is ruptured in the tensile test with respect to the length before the test. In addition, the reduction in area indicates a percentage of a reduction ratio of a cross-sectional area of a test piece when the test piece is ruptured in the tensile test with respect to a cross-sectional area of the test piece before the test.

The standard value of high-temperature tensile in AMS5663 is 12% or more for the elongation at the time of rupture and 15% or more for the reduction in area, and the results shown in Table 3 satisfy the standard value of AMS5663 for both the elongation and the reduction in area.

**[Table 3]**

| | | | |
|---|---|---|---|
| Reference Example | High-temperature tensile test | | |
| | Direction of test piece | Elongation (%) | Reduction in area (%) |
| | v | 34.0 | 32.0 |
| | H | 24.0 | 26.5 |

### Brief Description of the Reference Symbols

- 1: Homogenizing treatment step
- 2: Solutionizing treatment step
- 3: Aging treatment step
- 11: Crystal grain
- 12: Crystal grain boundary
- 20: Stator vane
- A: Cutout portion of test piece
- B: Smooth portion of test piece

## Claims

1. A method for manufacturing a metal lamination-shaped article consisting of a Ni-based alloy, the method comprising:
a homogenizing treatment step (1) of performing a homogenizing treatment on a metal lamination-shaped article consisting of the Ni-based alloy containing 50% by mass to 55% by mass of Ni, 17% by mass to 21% by mass of Cr, 2.8% by mass to 3.3% by mass of Mo, 4.75% by mass to 5.5% by mass of a total of Nb and Ta, 0.65% by mass to 1.15% by mass of Ti, 0.2% by mass to 0.8% by mass of Al, and the remainder consisting of Fe and inevitable impurities at 1,050°C or higher and 1,250°C or lower;
a solutionizing treatment step (2) of performing a solutionizing treatment on the metal lamination-shaped article after the homogenizing treatment step (1); and
an aging step (3) of performing an aging treatment at 650°C or higher and 720°C or lower after the solutionizing treatment step (2).

2. The method for manufacturing a metal lamination-shaped article according to Claim 1,
wherein in the homogenizing treatment step (1), the homogenizing treatment is performed at 1,050°C or higher and 1,250°C or lower for 2 hours or longer.

3. A shaped article consisting of a Ni-based alloy containing 50% by mass to 55% by mass of Ni, 17% by mass to 21% by mass of Cr, 2.8% by mass to 3.3% by mass of Mo, 4.75% by mass to 5.5% by mass of a total of Nb and Ta, 0.65% by mass to 1.15% by mass of Ti, 0.2% by mass to 0.8% by mass of Al, and the remainder consisting of Fe and inevitable impurities by metal lamination shaping, the shaped article exhibiting a result that satisfies the following test,
wherein in the test, a test piece including a standard smooth portion (B) and a notch (A) for a stress rupture test according to ASTM E292 is prepared from the formed Ni-based alloy, and
the test piece is maintained at 649°C ± 2°C, and when an axial initial stress of 689 MPa is applied to the test piece and then a load is continuously applied to the test piece, the smooth portion (B) of the test piece is first ruptured, and the rupture occurs after at least 23 hours.

4. The shaped article according to Claim 3,
wherein the shaped article is a stator vane (20).
